# EUROPÄISCHE PATENTSCHRIFT

(11) **EP 3 880 946 B1**
(45) Veröffentlichungstag und Bekanntmachung des Hinweises auf die Patenterteilung: **05.07.2023**
(21) Anmeldenummer: 19790176.2
(22) Anmeldetag: 16.10.2019
(51) Int. Cl.: F02B 75/04, F16C 3/28

(54) **VORRICHTUNG ZUM VERÄNDERN EINES KOMPRESSIONSVERHÄLTNISSES, HUBKOLBENBRENNKRAFTMASCHINE UND ARBEITSVORRICHTUNG**
DEVICE FOR VARYING A COMPRESSION RATIO, RECIPROCATING-PISTON INTERNAL COMBUSTION ENGINE AND WORKING DEVICE
DISPOSITIF PERMETTANT DE MODIFIER UN TAUX DE COMPRESSION, MOTEUR À COMBUSTION INTERNE À PISTONS ALTERNATIFS ET DISPOSITIF DE TRAVAIL

(30) Priorität: 14.11.2018 DE 102018128524
(43) Veröffentlichungstag der Anmeldung: 22.09.2021
(73) Patentinhaber: Bayerische Motoren Werke Aktiengesellschaft, 80809 München (DE)
(72) Erfinder: GUTZER, Ulrich, 80937 Muenchen (DE)
(86) Internationale Anmeldenummer: PCT/EP2019/078030
(87) Internationale Veröffentlichungsnummer: WO 2020/099056

(56) Entgegenhaltungen:
- EP-A1- 2 902 603

## Beschreibung

Die vorliegende Erfindung betrifft eine Vorrichtung zum Verändern eines Kompressionsverhältnisses einer Hubkolbenbrennkraftmaschine, eine Hubkolbenbrennkraftmaschine als solche sowie eine Arbeitsvorrichtung.

Zur Verbesserung der Performance von Hubkolbenbrennkraftmaschinen im Hinblick auf den Brennstoffverbrauch und die Leistungsabgabe wurden verschiedene Konzepte mit variablem Verdichtungsverhältnis in Abhängigkeit von einem Lastzustand der Brennkraftmaschine ersonnen.

Nachteilig bei herkömmlichen Vorgehensweisen, wie sie zum Beispiel in der EP 2 902 603 A1, der WO 2011/006537 A1, der EP 0 184 042 A1 und der DE 10 2011 018166 A1 beschrieben sind, betreffen Stabilitätsprobleme im Bereich des Kurbelwellengehäuses, zum Beispiel auf Grund einer sich ergebenden schmaleren Auslegung von Lagerwänden im Bereich eines verwendeten Verstellantriebs, der für die Verstellung des Kompressionsverhältnisses notwendig ist.

Der Erfindung liegt die Aufgabe zu Grunde, eine Vorrichtung zum Verändern eines Kompressionsverhältnisses einer Hubkolbenbrennkraftmaschine sowie eine Hubkolbenbrennkraftmaschine und eine damit ausgestattete Arbeitsvorrichtung zu schaffen, bei welchen mit besonders einfachen Maßnahmen, mit einem hohen Grad an Zuverlässigkeit und ohne Schwächung der Stabilität des Aufbaus und Verschlechterung der Performance der zu Grunde liegenden Brennkraftmaschine das Kompressionsverhältnis der Brennkraftmaschine eingestellt werden kann.

Die der Erfindung zu Grunde liegende Aufgabe wird mit den Merkmalen der unabhängigen Patentansprüche gelöst. Vorteilhafte Weiterbildungen sind Gegenstand der jeweiligen abhängigen Ansprüche.

Gemäß einem ersten Aspekt der vorliegenden Erfindung wird eine Vorrichtung zum Verändern eines Kompressionsverhältnisses einer Hubkolbenbrennkraftmaschine geschaffen
(i) mit einem außenverzahnten Exzenter, welcher ausgebildet und eingerichtet ist, zwischen einem Hubzapfen einer Kurbelwelle eines Kurbeltriebs und einem Pleuelauge eines Pleuels drehbeweglich zur Veränderung einer Hubhöhe eines mit dem Pleuel mechanisch gekoppelten Kolbens der Hubkolbenbrennkraftmaschine angeordnet zu sein oder zu werden,
(ii) mit einer Verstelleinheit, welche mit einer Außenverzahnung des Exzenters mechanisch gekoppelt und zum Einstellen des Exzenters durch Verdrehen des Exzenters ausgebildet ist, und
(iii) mit einer Koppeleinheit, welche zur mechanischen Kopplung des Exzenters mit der Verstelleinheit und dazu mit zueinander parallel angeordneten, radial zueinander beabstandeten und miteinander mechanisch gekoppelten ersten und zweiten Abnehmerwellen ausgebildet ist,
(vi) wobei die erste Abnehmerwelle mit der Außenverzahnung des Exzenters und die zweite Abnehmerwelle mit der Verstelleinheit mechanisch gekoppelt ist und
(v) wobei die Koppeleinheit und insbesondere die ersten und zweiten Abnehmerwellen, der Exzenter und die Verstelleinheit zur teilweisen oder vollständigen Anordnung (a) im Inneren eines Kurbelwellengehäuses der Kurbelwelle, (b) innerhalb eines Bauraums einer Wange der Kurbelwelle und (c) innerhalb eines Bauraums eines Gegengewichts ausgebildet sind.

Diese Sichtweise der vorliegenden Erfindung betrachtet Aspekte eines kompakten Aufbaus ohne Stabilitätseinbußen durch Verwendung einer Koppeleinheit mit zwei Abnehmerwellen und deren teilweise oder vollständige Unterbringung (a) im Inneren eines Gehäuses der Kurbelwelle, (b) innerhalb eines Bauraums einer Wange der Kurbelwelle und (c) innerhalb eines Bauraums eines Gegengewichts.

Bevorzugt weist bei dieser Sichtweise der erfindungsgemäßen Vorrichtung die Verstelleinheit ein Verstellrad auf, welches als Hohlrad mit einer Außenverzahnung zur Aufnahme einer Verstellbewegung für den Exzenter und drehfest zur Außenverzahnung mit einer Innenverzahnung zur mechanischen Kopplung an die Koppeleinheit ausgebildet ist. Durch diese Maßnahmen lässt sich eine besonders kompakte Bauweise durch geeignete Unterbringung der Verstelleinheit mit Hohlrad bei gleichzeitiger vereinfachter Montage erzielen.

Die Koppeleinheit, der Exzenter und die Verstelleinheit sind aus Gründen der weiteren Kompaktifizierung zur teilweisen oder vollständigen Anordnung (a) im Inneren eines Kurbelwellengehäuses der Kurbelwelle (b) innerhalb eines Bauraums einer Wange der Kurbelwelle und (c) innerhalb eines Bauraums eines Gegengewichts ausgebildet.

Zusätzlich kann die Koppeleinheit teilweise oder vollständig im Inneren des Bauraums des Verstellrads angeordnet sein.

Erfindungsgemäß ist die Koppeleinheit zur mechanischen Kopplung des Exzenters mit der Verstelleinheit mit zueinander parallel angeordneten, radial zueinander beabstandeten und miteinander mechanisch gekoppelten ersten und zweiten Abnehmerwellen ausgebildet.

Gemäß einem anderen Ausführungsbeispiel der erfindungsgemäßen Vorrichtung kann die Koppeleinheit als im Innenraum des Kurbelwellengehäuses und/oder im Bauraum einer Wange der Kurbelwelle und insbesondere eines Gegengewichts umlaufende Getriebeeinheit ausgebildet sein. Durch diese Maßnahmen wird ein noch höherer Grad an Kompaktheit erzielt.

Zusätzlich oder alternativ kann die erste Abnehmerwelle der Koppeleinheit ausgebildet sein, zu einer Drehachse der Kurbelwelle parallel und radial beabstandet angeordnet zu sein oder zu werden.

Die erste Abnehmerwelle weist vorzugsweise ein außenverzahntes erstes Zahnrad zur Verdrehung des Exzenters auf und ist alternativ oder zusätzlich axial versetzt und drehfest zum ersten Zahnrad der ersten Abnehmerwelle mit einem zweiten Zahnrad der ersten Abnehmerwelle ausgebildet.

Bei einer anderen Fortbildung der erfindungsgemäßen Vorrichtung ist die zweite Abnehmerwelle der Koppeleinheit dazu ausgebildet, zur Drehachse der Kurbelwelle und zur ersten Abnehmerwelle parallel und radial beabstandet angeordnet zu sein oder zu werden.

Zusätzlich oder alternativ kann die zweite Abnehmerwelle ein außenverzahntes erstes Zahnrad kämmend mit dem zweiten Zahnrad der ersten Abnehmerwelle aufweisen und/oder axial versetzt und drehfest zum ersten Zahnrad der zweiten Abnehmerwelle mit einem außenverzahnten zweiten Zahnrad der zweiten Abnehmerwelle ausgebildet sein.

In diesem Zusammenhang ist es von besonderem Vorteil, wenn gemäß einem anderen Ausführungsbeispiel der erfindungsgemäßen Vorrichtung das zweite Zahnrad der zweiten Abnehmerwelle auf der Innenverzahnung des Verstellrads kämmend angeordnet ist.

Für den eigentlichen Antrieb des Exzenters und damit für das eigentliche Verstellen des Kompressionsverhältnisses ist es von besonderem Vorteil, wenn zusätzlich oder alternativ die Außenverzahnung des Verstellrads mit einer Verstelleinrichtung eingreifend angeordnet und ausgebildet ist.

Eine derartige Verstelleinrichtung kann zum Beispiel von einem Schneckentrieb und/oder einer Zahnstange gebildet werden.

Es ist ferner von besonderem Vorteil, wenn das Verstellrad zur drehbaren Lagerung in Innenraum eines Kurbelgehäuses der Hubkolbenbrennkraftmaschine ausgebildet ist.

Bisher wurden Anordnungen betrachtet, bei welchen zwischen dem Exzenter einerseits und der Verstelleinheit andererseits eine relativ direkte mechanische Anbindung vorliegt. Häufig ist jedoch vorteilhaft, wenn zusätzliche Zwischenelemente vorgesehen werden, mit welchen andere Komponenten gesteuert angetrieben werden können.

So ist es besonders vorteilhaft, wenn bei einer anderen Ausgestaltungsform der erfindungsgemäßen Vorrichtung ein Zwischengetriebe - insbesondere als Teil der Koppeleinheit, mit einem außenverzahnten Zwischenzahnrad oder mit einer ein außenverzahntes Zwischenzahnrad tragenden Zwischenwelle ausgebildet wird.

Eine derartige Zwischenwelle kann parallel und radial beabstandet zur Kurbelwellenachse und/oder zur ersten und zweiten Abnehmerwelle ausgebildet sein oder werden.

Erfindungsgemäß ist bei dieser Ausführungsform das Zwischengetriebe dazu eingerichtet, mittelbar oder unmittelbar eine mechanische Kopplung und insbesondere ein Kämmen - insbesondere des ersten Zahnrads der ersten Abnehmerwelle - mit der Außenverzahnung des Exzenters zu bewirken.

Unter diesen Umständen ist es ferner vorteilhaft, wenn dabei ein Synchronisiergetriebe - insbesondere als Teil der Koppeleinheit und/oder eines oder des Zwischengetriebes, mit einem außenverzahnten Synchronisierzahnrad, einer ein außenverzahntes Synchronisierzahnrad tragenden Synchronisierungswelle und/oder parallel und/oder koinzidierend oder radial beabstandet zur Kurbelwellenachse, zu einer etwaigen Zwischenwelle und/oder zur ersten und zweiten Abnehmerwelle - zum Ändern eines Kompressionsverhältnisses weiterer Zylinder der Hubkolbenbrennkraftmaschine ausgebildet ist oder wird.

In diesem Fall ist das das Synchronisiergetriebe dazu eingerichtet, mittelbar oder unmittelbar eine mechanische Kopplung und insbesondere ein Kämmen zu bewirken - insbesondere des Synchronisierzahnrads mit der Außenverzahnung des Exzenters und/oder um dadurch angetrieben zu werden, und insbesondere zusätzlich mit der Koppeleinheit, dem Zwischengetriebe und/oder dem Zwischenzahnrad, insbesondere um den Exzenter anzutreiben.

Durch diese Maßnahmen werden Möglichkeiten bereitgestellt, den Exzenter zur Verstärkung des Kompressionsverhältnisses entweder direkt und unmittelbar oder indirekt und mittelbar, nämlich vermittelt durch das Synchronisiergetriebe anzutreiben und zu verstellen, wobei beim direkten und unmittelbaren Antreiben und Verstellen die Synchronisierung durch den Exzenter vermittelt erfolgt.

Die vorliegende Erfindung schafft des Weiteren eine Hubkolbenbrennkraftmaschine als solche, welche mit einem Kurbeltrieb mit einer Kurbelwelle mit zumindest einem beiderseits drehbeweglich gelagerten Hubzapfen ausgebildet ist, wobei der Hubzapfen mit einem Pleuel und einem in einem Zylinder der Hubkolbenbrennkraftmaschine schiebebeweglich angeordneten Kolben in Wirkverbindung steht und zur Wandlung einer rotatorischen Bewegung der Kurbelwelle in eine bidirektionale, translatorische Bewegung des Kolbens mit einer definierten Hubhöhe ausgebildet und eingerichtet ist. Zum Verändern eines Kompressionsverhältnisses der Hubkolbenbrennkraftmaschine weist diese eine erfindungsgemäß ausgestaltete Vorrichtung zum Verändern des Kompressionsverhältnisses der Hubkolbenbrennkraftmaschine auf.

Ferner ist Gegenstand der vorliegenden Erfindung auch eine Arbeitsvorrichtung, welche eine erfindungsgemäß ausgestaltete Hubkolbenbrennkraftmaschine aufweist, die als Antriebsmittel für ein Aggregat der Arbeitsvorrichtung ausgebildet ist

### Kurzbeschreibung der Figuren

Weitere Einzelheiten, Merkmale und Vorteile der Erfindung ergeben sich aus der nachfolgenden Beschreibung und den Figuren.

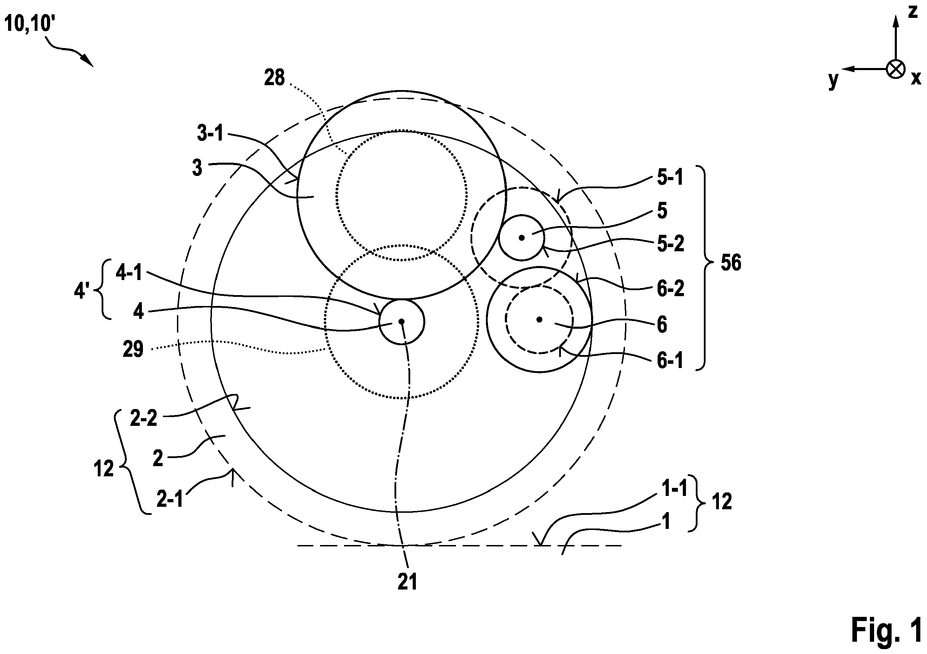

- Figur 1: zeigt in axialer Draufsicht eine Ausführungsform der erfindungsgemäßen Vorrichtung zum Verändern eines Kompressionsverhältnisses einer Hubkolbenbrennkraftmaschine mit einer Koppeleinheit zwischen Exzenter und Verstelleinheit, wobei durch den Exzenter ein Synchronisiergetriebe angesteuert wird.

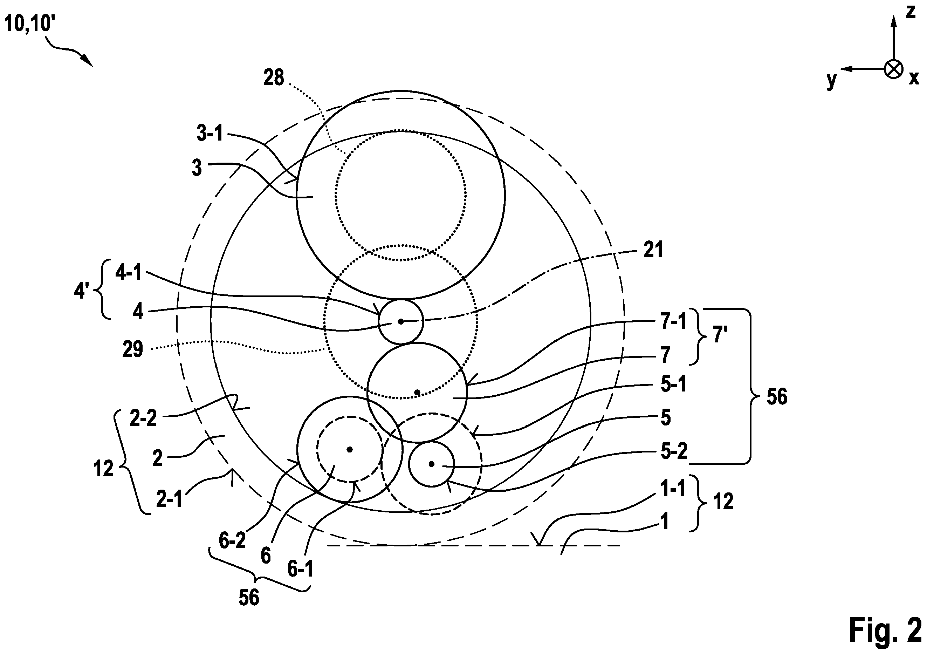

- Figur 2: zeigt in axialer Draufsicht eine andere Ausführungsform der erfindungsgemäßen Vorrichtung zum Verändern eines Kompressionsverhältnisses einer Hubkolbenbrennkraftmaschine, wobei ein Exzenter unter Verwendung eines Zwischengetriebes und eines Synchronisiergetriebes angetrieben und gesteuert wird.

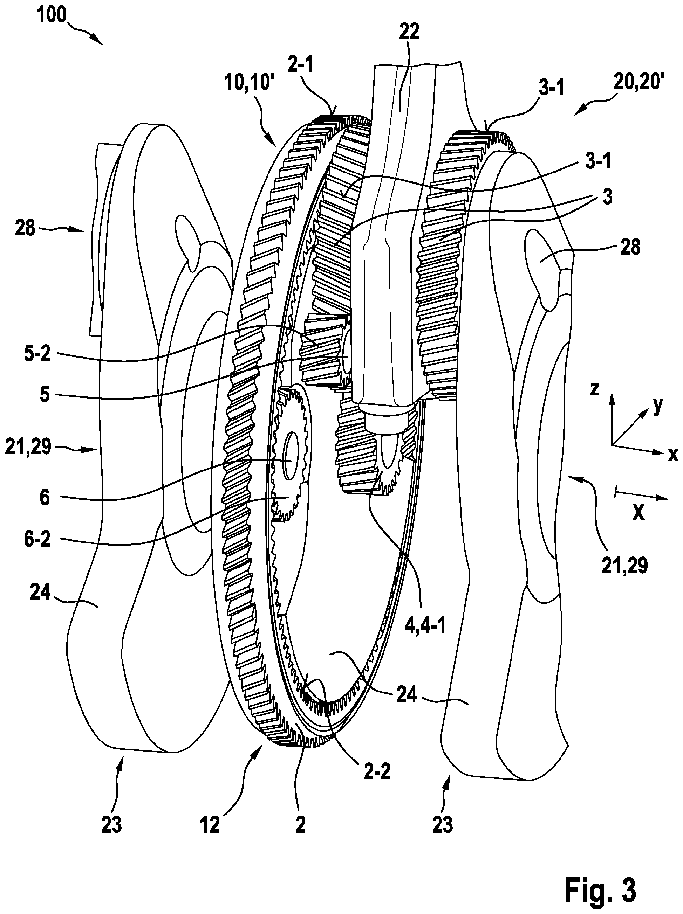

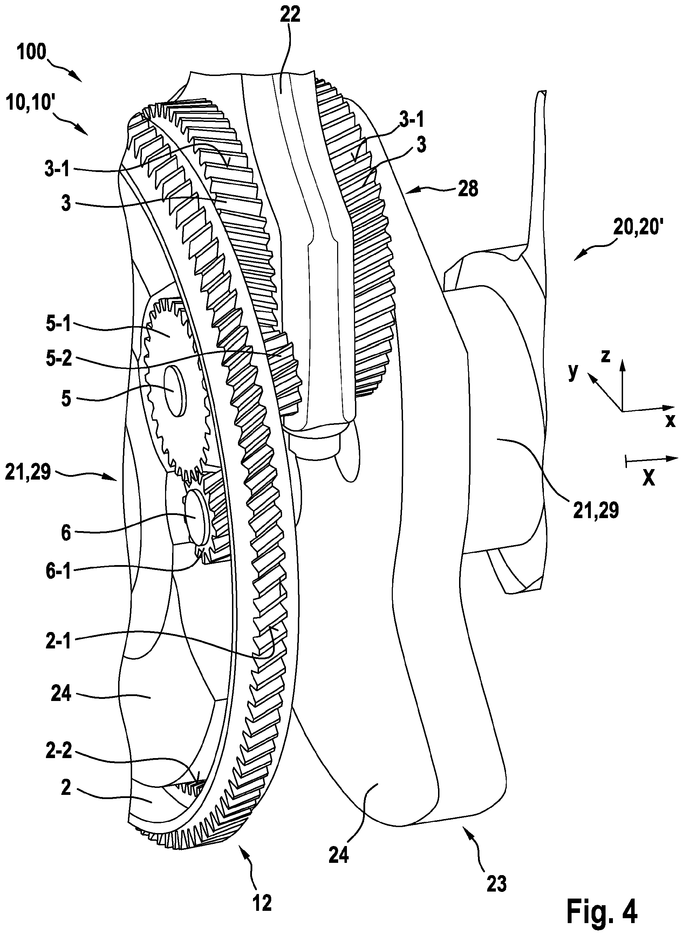

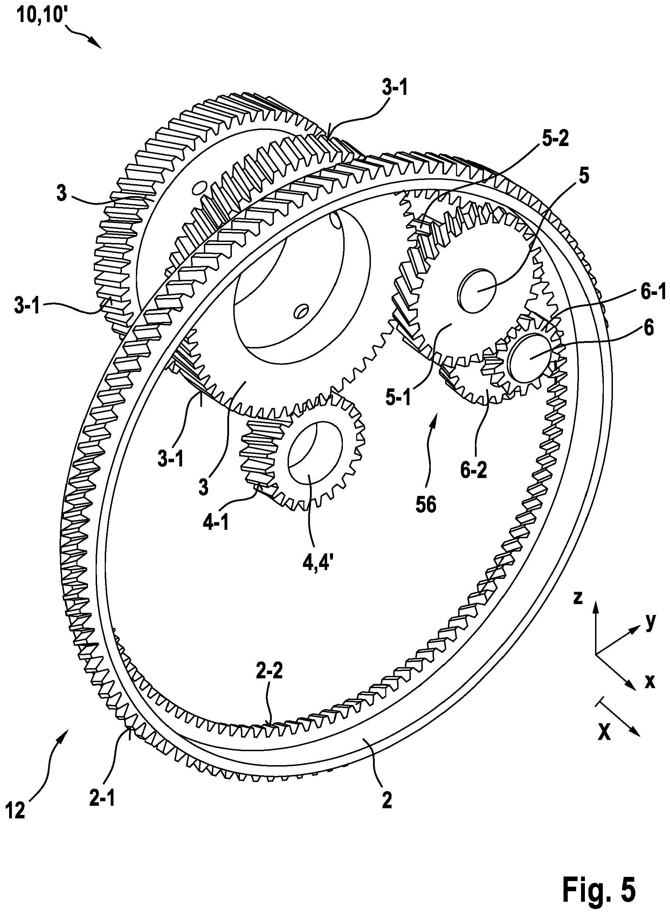

- Figuren 3 bis 5: zeigen verschiedene perspektivische Ansichten der Ausführungsform der erfindungsgemäßen Vorrichtung zum Verändern eines Kompressionsverhältnisses gemäß Figur 1.

Nachfolgend werden unter Bezugnahme auf die Figuren 1 bis 5 Ausführungsbeispiele und der technische Hintergrund der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Figur 1 zeigt in axialer Draufsicht eine Ausführungsform der erfindungsgemäßen Vorrichtung 10 zum Verändern eines Kompressionsverhältnisses einer Hubkolbenbrennkraftmaschine 100 mit einer Koppeleinheit 56 zwischen Exzenter 3 und Verstelleinheit 12, wobei durch den Exzenter 3 ein Synchronisiergetriebe 4' angesteuert wird.

Im Zusammenhang mit den weiteren Figuren 3 bis 5, welche verschiedene perspektivische Ansichten der Ausführungsform der erfindungsgemäßen Vorrichtung 10 zum Verändern eines Kompressionsverhältnisses gemäß Figur 1 zeigen, wird insgesamt deutlich, dass der Exzenter 3 zur Fassung des Hublagerzapfens oder Pleuellagerzapfens 28 und mit einer Außenverzahnung 3-1 zu dessen Rotation und damit zur Einstellung des Kompressionsverhältnisses in einem zugeordneten Zylinder ausgebildet ist, nämlich über die Hubtiefe des am Pleuel 22 angebrachten Kolbens.

Zur gesteuerten Rotation des Exzenters 3 ist eine Verstelleinheit 12 ausgebildet, welche in der in Figur 1 dargestellten Ausführungsform aus einem Verstellrad 2 besteht, welches über seine Außenverzahnung 2-1 kämmend über eine Verstelleinrichtung 1, zum Beispiel nach Art eines Betriebs, einer Schnecke oder Zahnstange und deren Schneckengewinde oder Verzahnung 1-1 im Inneren eines Kurbelwellengehäuses einer zu Grunde liegenden Kurbelwelle 20 eines Kurbeltriebs 20' um eine entsprechende Lagerung rotierbar ist.

Das Verstellrad 2 der Verstelleinheit 12 ist somit als Hohlrad ausgebildet, welches neben der Außenverzahnung 2-1 auch eine Innenverzahnung 2-2 aufweist, die mit einer Koppeleinheit 56 kämmend mechanisch gekoppelt ist.

Für eine derartige Kopplung weist die Koppeleinheit 56 eine erste Abnehmerwelle 5 mit drehfest an der Welle 5 angeordneten ersten und zweiten Zahnrädern 5-1 und 5-2 auf. Des Weiteren ist eine zweite Abnehmerwelle 6 mit drehfest an der Welle 6 angeordneten ersten und zweiten Zahnrädern 6-1 und 6-2 vorgesehen.

Die beiden Abnehmerwellen 5 und 6 sind so parallel zueinander und parallel zur Kurbelwelle 20 und Kurbelwellenachse 21 und zueinander jeweils radial beabstandet und derart angeordnet,
(a) dass das zweite Zahnrad 6-2 der zweiten Abnehmerwelle 6 mit der Innenverzahnung 2-2 kämmt,
(b) dass das erste Zahnrad 6-1 der zweiten Abnehmerwelle 6 mit dem ersten Zahnrad 5-1 der ersten Abnehmerwelle 5 kämmt und
(c) dass das zweite Zahnrad 5-2 der ersten Abnehmerwelle 5 mit der Außenverzahnung 3-1 des Exzenters 3 kämmt,
(d) so dass insgesamt bei einer Betätigung der Verstelleinrichtung 1 über eine Rotation des Verstellrads 2 und die sich anschließenden Rotationen der beiden Abnehmerwellen 5 und 6 und der entsprechenden Zahnräder 5-1 bis 6-2 der Exzenter 3 rotiert und damit der wirksame Kolbenhub des mit dem Pleuel 22 verbundenen Kolbens variiert werden.

Aus den Figuren 1 und 3 bis 5 wird auch deutlich, dass die Außenverzahnung 3-1 des Exzenters 3 auch mit einer Synchronisierungsverzahnung 4-1 eines Synchronisierung Zahnrads oder eines Synchronisierungsgetriebes 4`, zum Beispiel einer die Verzahnung 4-1 tragenden Synchronisierungswelle 4, kämmt, um eine Synchronisierung mit weiteren Zylindern der Hubkolbenbrennkraftmaschine 100 über deren Exzenter, die hier nicht dargestellt sind, zu bewirken.

In den Figuren 1 und 3 bis 5 sind Hublagerzapfen 28 oder Pleuellagerzapfen und die Grundlagerzapfen 29 oder Hauptlagerzapfen zu erkennen.

Figur 2 zeigt in axialer Draufsicht eine andere Ausführungsform der erfindungsgemäßen Vorrichtung 10 zum Verändern eines Kompressionsverhältnisses einer Hubkolbenbrennkraftmaschine 100, wobei ein Exzenter 3 unter Verwendung eines Zwischengetriebes 4' und eines Synchronisiergetriebes 7' angetrieben und gesteuert wird.

Bei dieser alternativen Anordnung der Vorrichtung 10 zum Verändern eines Kompressionsverhältnisses einer Hubkolbenbrennkraftmaschine 100 kämmt das zweite Zahnrad 5-2 der ersten Abnehmerwelle 5 nicht wie in der Ausführungsform gemäß den Figuren 1 und 3 bis 5 direkt mit der Außenverzahnung 3-1 des Exzenters 3, sondern es wird eine mittelbare und somit indirekte mechanische Kopplung zum Exzenter 3 wie folgt bewirkt.

Zunächst kämmt das zweite Zahnrad 5-2 der ersten Abnehmerwelle 5 mit der Verzahnung 7-1 des Zwischengetriebes 7' und insbesondere mit einer Verzahnung eines entsprechenden Zahnrads auf der Zwischenwelle 7. Über das Zwischengetriebe 7` wird die Rotation des ersten Zahnrads 5-2 der ersten Abnehmerwelle 5 als Rotation an die Synchronisierungsverzahnung 4-1 der Synchronisierungswelle 4 des Synchronisierungsgetriebes 4` übertragen.

Das Synchronisierungsgetriebe 4` kämmt über die Synchronisierungsverzahnung 4-1 nun mit der Außenverzahnung 3-1 des Exzenters 3 und versetzt dieses zur Einstellung des Kompressionsverhältnisses in Rotation.

Bei der Anordnung der Figur 2 befinden sich die Abnehmerwellen 5 und 6 und die Zwischenwelle 7 an einer Position, welche dem Hublagerzapfen oder Pleuellagerzapfen 28 in Bezug auf die Kurbelwellenachse 21 diametral gegenüberliegt. Diese Wellen 5 bis 7 sind also im Bereich des Gegengewichts 24 der Kurbelwellenwangen 23 angeordnet.

Folglich stellen die maßgeblichen Getriebekomponenten der Anordnungen der Vorrichtungen 10 zum Verändern eines Kompressionsverhältnisses gemäß den Figuren 1 bis 5 umlaufende Verstellgetriebe 10' dar, welche im Wesentlichen im Bauraum einer jeweiligen umlaufenden Kurbelwellenwange 23 und insbesondere im Bauraum eines umlaufenden Gegengewichts 24 der zu Grunde liegenden Kurbelwelle 20 des Kurbeltriebs 20' der Hubkolbenbrennkraftmaschine 100 angeordnet sind und dort im Betrieb ebenfalls umlaufen.

In den Darstellungen der Figuren 1 bis 5 ist die zum Hubzapfen 28 exzentrische Kontaktfläche zum großen Pleuelauge, also der eigentlichen Exzenter 3, nicht explizit dargestellt, da die Erfindung maßgeblich die Steuerung des Exzenters 3 betrifft.

Der Exzenter 3 rotiert mit einer festen Phase und/oder Relativdrehzahl zur Kurbelwelle, typischerweise mit einem Faktor von + ½ zur Drehzahl der Kurbelwelle. Dabei gewährleisten die Verzahnungen diese Verhältnisse durch ein geeignetes Kämmen mit dem stehenden Verstellrad 2, dessen Verdrehung über die Verstelleinrichtung 1 dann den Phasenwinkel der Rotation des Exzenters 3 und somit die Einstellung des Verdichtungsverhältnisses bewirkt. Dabei kann zum Beispiel der Exzenter 3 mit einem relativ zum Zündzeitpunkt entsprechend vorliegenden Verdrehwinkel und einer daraus resultierenden Verdichtung eingestellt werden.

Diese und weitere Merkmale und Eigenschaften der vorliegenden Erfindung werden an Hand der folgenden Darlegungen weiter erläutert:

Die vorliegende Erfindung betrifft insbesondere auch Verbrennungsmotoren 100 mit einem Umlaufgetriebe 10' zur Verdichtungsverstellung und mit einem in Bezug auf eine zu Grunde liegende Kurbelwelle 20 eines Kurbeltriebs 20' mittigen Verstellantrieb über eine Abnehmerwelle 5, die mit einem kleinen Verstellrad 5-2 außen an einer Außenverzahnung 3-1 an einem Exzenter 3 kämmt.

Herkömmlicherweise tritt durch die Lage des Verstellrads 5-2 innen zwischen einer Kurbelwellenwange 23 und dem Lagerstuhl des Kurbelwellengehäuses eine Schwächung dieser Komponenten auf. Außerdem wird die Lagerwand verschoben und im Bereich des Verstellantriebs herkömmlicherweise schmaler gestaltet, so dass es beim Vorgehen gemäß dem Stand der Technik zu Komplikationen bei der Herstellung, der Montage und/oder beim Betrieb kommen kann. Herkömmlicherweise kann auch eine Teilung von Verstellrad bzw. Kurbelwelle 23 erzwungen werden.

Erfindungsgemäß wird unter anderem ein Verstellantrieb mit einer zweiten Abnehmerwelle 6 vorgeschlagen. Diese wird von einem großen, innenverzahnten Verstellrad 2 angetrieben und treibt ihrerseits die erste Abnehmerwelle 5 an. Das Verstellrad 2 kann zum Beispiel über eine außenliegende Schnecke 1 im Kurbelwellengehäuse winkelmäßig positioniert oder ausgerichtet werden, um die gewünschte Verdichtung einzustellen. Es kann geschlossen über die Kurbelwelle 20 gefädelt und dann mit dieser im Kurbelwelle Gehäuse montiert werden. Beide Abnehmerwellen 5 und 6 sind in der Kurbelwelle 20 gelagert und befinden sich im Bauraum einer Wange 23.

Wie aus der Figur 1 ersichtlich ist, erfolgt der Verstellantrieb zum Beispiel mittels eines Schneckentriebs 1 auf Hohlrad 2, und zwar mittels der Außenverzahnung 2-1. Das Hohlrad 2 treibt über die Innenverzahnung 2-2 ein zweites Abnehmerrad 6-2 einer zweiten Abnehmerwelle 6, auf welcher ein weiteres, erstes Zahnrad 6-1 die erste Abnehmerwelle 5 antreibt, deren zweites Zahnrad 5-1 mit der Außenverzahnung 3-1 des Exzenters 3 in Eingriff steht.

In der der Darstellung der Figur 1 liegt noch die Synchronverzahnung 4-1 des Synchronisiergetriebes 4' mit der Welle 4 zu weiteren Zylindern vor.

Zu erkennen sind auch die Hub- und Grundlagerzapfen 28 bzw. 29.

Sollte die Festigkeit der Kurbelwelle 20 bei der Ausführungsform gemäß Figur 1 zu sehr beeinträchtigt werden, lassen sich die Abnehmerwellen 5 und 6 auch im Bereich des Gegengewichts 24 anordnen und über ein weiteres Rad 7-1 eines Zwischengetriebes 7' mit einer Welle 7 mit der Synchronverzahnung 4-1 koppeln.

Als Vorteile stellen sich unter anderem, eine vereinfachte Bauform, ein Stabilität- und/oder Festigkeitserhalt von Kurbelwelle und Kurbelwellengehäuse, geringere Vorhalte im Kurbelwellengehäuse für die Option mit variablem Kompressionsverhältnis sowie im Betrieb Verbrauchs- und Emissionsvorteile ein.

### Bezugszeichenliste:

- 1: Verstelleinrichtung, Trieb, Schnecke, Zahnstange
- 1-1: Verzahnung, Schneckengewinde
- 2: Verstellrad
- 2-1: Außenverzahnung
- 2-2: Innenverzahnung
- 3: Exzenter
- 3-1: Außenverzahnung Exzenter 3
- 4: Synchronisierungswelle
- 4': Synchronisiergetriebe
- 4-1: Synchronisierungsverzahnung, Synchronisierungszahnrad
- 5: (erste) Abnehmerwelle
- 5-1: (erste(s)) Verzahnung/Zahnrad der (ersten) Abnehmerwelle 5
- 5-2: (zweite(s)) Verzahnung/Zahnrad der (ersten) Abnehmerwelle 5
- 6: (zweite) Abnehmerwelle
- 6-1: (erste(s)) Verzahnung/Zahnrad der (zweiten) Abnehmerwelle 6
- 6-2: (zweite(s)) Verzahnung/Zahnrad der (zweiten) Abnehmerwelle 6
- 7: Zwischenwelle
- 7`: Zwischengetriebe
- 7-1: Verzahnung/Zahnrad der Zwischenwelle 7
- 10: Vorrichtung zum Verändern eines Kompressionsverhältnisses
- 10': (umlaufendes) Verstellgetriebe
- 12: Verstelleinheit
- 20: Kurbelwelle
- 20`: Kurbeltrieb
- 21: Kurbelwellenachse
- 22: Pleuel
- 23: Kurbelwellenwange, Wange
- 24: Gegengewicht
- 28: Hublagerzapfen, Pleuellagerzapfen
- 29: Grundlagerzapfen, Hauptlagerzapfen
- 56: Koppeleinheit

- 100: Hubkolbenbrennkraftmaschine, Motor

- x: Raumrichtung
- X: Längserstreckungsrichtung der Kurbelwelle/der Kurbelwellenachse 21
- y: Raumrichtung
- z: Raumrichtung

## Patentansprüche

1. Vorrichtung (10) zum Verändern eines Kompressionsverhältnisses einer Hubkolbenbrennkraftmaschine (100),
- mit einem außenverzahnten Exzenter (3), welcher zwischen einem Hubzapfen (28) einer Kurbelwelle (20) eines Kurbeltriebs (20') der Hubkolbenbrennkraftmaschine (100) und einem Pleuelauge eines Pleuels (22) der Hubkolbenbrennkraftmaschine (100) drehbeweglich zur Veränderung einer Hubhöhe eines mit dem Pleuel (22) mechanisch gekoppelten Kolbens der Hubkolbenbrennkraftmaschine (100) angeordnet ist,
- mit einer Verstelleinheit (12), welche mittelbar mit einer Außenverzahnung (3-1) des Exzenters (3) mechanisch gekoppelt und zum Einstellen des Exzenters (3) durch Verdrehen des Exzenters (3) ausgebildet ist, und
- mit einer Koppeleinheit (56), welche zur mechanischen Kopplung des Exzenters (3) mit der Verstelleinheit (12) ausgebildet ist
wobei:
- die Koppeleinheit (56) mit zueinander parallel angeordneten, radial zueinander beabstandeten und miteinander mechanisch gekoppelten ersten und zweiten Abnehmerwellen (5, 6) ausgebildet ist,
- die erste Abnehmerwelle (5) mit der Außenverzahnung (3-1) des Exzenters (3) mechanisch gekoppelt ist,
- die zweite Abnehmerwelle (6) mit der Verstelleinheit (12) mechanisch gekoppelt ist,
- die Koppeleinheit (56) mit den ersten und zweiten Abnehmerwellen (5, 6), der Exzenter (3) und die Verstelleinheit (12) teilweise oder vollständig im Inneren eines Kurbelwellengehäuses der Kurbelwelle (20) der Hubkolbenbrennkraftmaschine (100), eines Bauraums einer Wange (23) der Kurbelwelle (20) der Hubkolbenbrennkraftmaschine (100) und eines Bauraums eines Gegengewichts (24) der Kurbelwelle (20) der Hubkolbenbrennkraftmaschine (100) ausgebildet sind,
- die erste Abnehmerwelle (5) der Koppeleinheit (56) zu einer Drehachse (21) der Kurbelwelle (20) der Hubkolbenbrennkraftmaschine (100) parallel und radial beabstandet angeordnet ist und ein außenverzahntes erstes Zahnrad (5-2) zur Verdrehung des Exzenters (3) sowie axial versetzt und drehfest zum ersten Zahnrad (5-2) der ersten Abnehmerwelle (5) ein zweites Zahnrad (5-1) aufweist, und
- die zweite Abnehmerwelle (6) der Koppeleinheit (56) zur Drehachse (21) der Kurbelwelle (20) und zur ersten Abnehmerwelle (5) parallel und radial beabstandet angeordnet ist und ein außenverzahntes erstes Zahnrad (6-1) kämmend mit dem zweiten Zahnrad (5-2) der ersten Abnehmerwelle (5) sowie axial versetzt und drehfest zum ersten Zahnrad (6-1) der zweiten Abnehmerwelle (6) ein außenverzahntes zweites Zahnrad (6-2) aufweist.

2. Vorrichtung (10) nach Anspruch 1, bei welcher die Verstelleinheit (12) ein Verstellrad (2) aufweist, welches als Hohlrad mit einer Außenverzahnung (2-1) zur Aufnahme einer Verstellbewegung für den Exzenter (3) und drehfest zur Außenverzahnung (2-1) mit einer Innenverzahnung (2-2) zur mechanischen Kopplung an die Koppeleinheit (56) ausgebildet ist.

3. Vorrichtung (10) nach Anspruch 2, bei welcher die Koppeleinheit (56) teilweise oder vollständig im Inneren des Bauraums des Verstellrads (2) angeordnet ist.

4. Vorrichtung (10) nach einem der vorangehenden Ansprüche, bei welcher die Koppeleinheit (56) als teilweise oder vollständig (a) im Innenraum des Kurbelwellengehäuses, (b) im Bauraum einer Wange (23) der Kurbelwelle (20) und (c) im Bauraum eines Gegengewichts (24) umlaufende Getriebeeinheit ausgebildet ist.

5. Vorrichtung (10) nach einem der Ansprüche 2 bis 4, sofern auf Anspruch 2 rückbezogen, bei welcher das zweite Zahnrad (6-2) der zweiten Abnehmerwelle (6) auf der Innenverzahnung (2-2) des Verstellrads (2) kämmend angeordnet ist.

6. Vorrichtung (10) nach einem der Ansprüche 2 bis 5, sofern auf Anspruch 2 rückbezogen, bei welcher die Außenverzahnung (2-1) des Verstellrads (2) mit einer Verstelleinrichtung (1) eingreift.

7. Vorrichtung (10) nach einem der Ansprüche 2 bis 6, sofern auf Anspruch 2 rückbezogen, bei welcher das Verstellrad (2) im Innenraum des Kurbelgehäuses der Hubkolbenbrennkraftmaschine (100) drehbar gelagert ist.

8. Vorrichtung (10) nach einem der vorangehenden Ansprüche,
- bei welcher ein Zwischengetriebe (7') als Teil der Koppeleinheit (56) mit einem außenverzahnten Zwischenzahnrad (7-1) und mit einer ein außenverzahntes Zwischenzahnrad (7-1) tragenden Zwischenwelle (7) parallel und radial beabstandet zur Kurbelwellenachse (21) und zur ersten und zweiten Abnehmerwelle (5, 6) ausgebildet ist,
- wobei das Zwischengetriebe (7`) unmittelbar eine mechanische Kopplung durch Kämmen des ersten Zahnrads (5-2) der ersten Abnehmerwelle (5) mit der Außenverzahnung (3-1) des Exzenters (3) bewirkt.

9. Vorrichtung (10) nach einem der vorangehenden Ansprüche,
- bei welcher ein Synchronisiergetriebe (4`) als Teil der Koppeleinheit (56) mit einem außenverzahnten Synchronisierzahnrad (4-1) und einer ein außenverzahntes Synchronisierzahnrad (4-1) tragenden Synchronisierungswelle (4) parallel zur Kurbelwellenachse (21) und zur ersten und zweiten Abnehmerwelle (5, 6) zum Ändern eines Kompressionsverhältnisses weiterer Zylinder der Hubkolbenbrennkraftmaschine (100) ausgebildet ist,
- wobei das Synchronisiergetriebe (4`) ein Kämmen des Synchronisierzahnrads (4-1) mit der Außenverzahnung (3-1) des Exzenters (3) bewirkt.

10. Hubkolbenbrennkraftmaschine (100),
- mit einem Kurbeltrieb (20') mit einer Kurbelwelle (20) mit zumindest einem beiderseits drehbeweglich gelagerten Hubzapfen (28),
- wobei der Hubzapfen (28)
(i) mit einem Pleuel (22) und einem in einem Zylinder der Hubkolbenbrennkraftmaschine (100) schiebebeweglich angeordneten Kolben in Wirkverbindung steht und
(ii) zur Wandlung einer rotatorischen Bewegung der Kurbelwelle (20) in eine bidirektionale, translatorische Bewegung des Kolbens mit einer definierten Hubhöhe ausgebildet ist, und
- mit einer Vorrichtung (10) nach einem der Ansprüche 1 bis 9 zum Verändern eines Kompressionsverhältnisses der Hubkolbenbrennkraftmaschine (100).

11. Hubkolbenbrennkraftmaschine (100) nach Anspruch 10, welche derart eingerichtet ist,
(a) dass ein Exzenter (3) des Kurbeltriebs (20') mit einer relativen und/oder steuerbar einstellbaren Phase und/oder Relativdrehzahl zur Drehung der Kurbelwelle (20) rotiert,
(b) dass Verzahnungen diese Verhältnisse durch ein geeignetes Kämmen mit einem stehenden Verstellrad (2) der Vorrichtung (10) zum Verändern eines Kompressionsverhältnisses gewährleisten und
(c) dass durch eine Verdrehung des Verstellrads (1) über Verstelleinrichtung (1) der Vorrichtung zum Verändern eines Kompressionsverhältnisses den Phasenwinkel der Rotation des Exzenters (3) und somit die Einstellung des Verdichtungsverhältnisses bewirkbar ist,
(d) wobei der Exzenter (3) mit einem relativ zum Zündzeitpunkt entsprechend vorliegenden Verdrehwinkel und einer daraus resultierenden Verdichtung einstellbar ist.

12. Arbeitsvorrichtung mit einer Hubkolbenbrennkraftmaschine (100), welche als Antriebsmittel für ein Aggregat der Arbeitsvorrichtung und nach Anspruch 10 oder 11 ausgebildet ist.

## Claims

1. Apparatus (10) for varying a compression ratio of a reciprocating piston internal combustion engine (100),
- with an externally toothed eccentric (3) which is arranged in a rotationally movable manner between a crankpin journal (28) of a crankshaft (20) of a crank drive (20') of the reciprocating piston internal combustion engine (100) and a connecting rod eye of the connecting rod (22) of the reciprocating piston internal combustion engine (100) in order to vary a stroke height of the piston, coupled mechanically to the connecting rod (22), of the reciprocating piston internal combustion engine (100),
- with an adjusting unit (12) which is mechanically coupled indirectly to an external toothing system (3-1) of the eccentric (3), and is configured to set the eccentric (3) by way of rotation of the eccentric (3), and
- the coupling unit (56) which is configured to mechanically couple the eccentric (3) to the adjusting unit (12),
wherein:
- the coupling unit (56) is configured with first and second take-off shafts (5, 6) which are arranged parallel to one another, are spaced apart from one another radially, and are coupled mechanically to one another,
- the first take-off shaft (5) is coupled mechanically to the external toothing system (3-1) of the eccentric (3),
- the second take-off shaft (6) is coupled mechanically to the adjusting unit (12),
- the coupling unit (56) with the first and second take-off shafts (5, 6), the eccentric (3) and the adjusting unit (12) are configured partially or completely in the interior of a crankcase of the crankshaft (20) of the reciprocating piston internal combustion engine (100), an interior space of a web (23) of the crankshaft (20) of the reciprocating piston internal combustion engine (100), and an installation space of a counterweight (24) of the crankshaft (20) of the reciprocating piston internal combustion engine (100),
- the first take-off shaft (5) of the coupling unit (56) is arranged spaced apart parallel and radially with respect to a rotational axis (21) of the crankshaft (20) of the reciprocating piston internal combustion engine (100), and has an externally toothed first gearwheel (5-2) for rotating the eccentric (3), and a second gearwheel (5-1) offset axially and fixedly for conjoint rotation with respect to the first gearwheel (5-2) of the first take-off shaft (5), and
- the second take-off shaft (6) of the coupling unit (56) is arranged spaced apart parallel and radially with respect to the rotational axis (21) of the crankshaft (20) and with respect to the first take-off shaft (5), and has an externally toothed first gearwheel (6-1) such that it meshes with the second gearwheel (5-2) of the first take-off shaft (5), and has an externally toothed second gearwheel (6-2) offset axially and fixedly for conjoint rotation with respect to the first gearwheel (6-1) of the second take-off shaft (6).

2. Apparatus (10) according to Claim 1, in which the adjusting unit (12) has an adjusting gear (2) which is configured as an internal gear with an external toothing system (2-1) for receiving an adjusting movement for the eccentric (3), and is configured fixedly with respect to the external toothing system (2-1) for conjoint rotation with an internal toothing system (2-2) for mechanical coupling to the coupling unit (56).

3. Apparatus (10) according to Claim 2, in which the coupling unit (56) is arranged partially or completely in the interior of the installation space of the adjusting gear (2).

4. Apparatus (10) according to one of the preceding claims, in which the coupling unit (56) is configured as a gear unit which revolves partially or completely (a) in the interior space of the crankcase, (b) in the installation space of a web (23) of the crankshaft (20), and (c) in the installation space of the counterweight (24) .

5. Apparatus (10) according to one of Claims 2 to 4, if referring back to Claim 2, in which the second gearwheel (6-2) of the second take-off shaft (6) is arranged so as to mesh on the internal toothing system (2-2) of the adjusting gear (2).

6. Apparatus (10) according to one of Claims 2 to 5, if referring back to Claim 2, in which the external toothing system (2-1) of the adjusting gear (2) engages with an adjusting device (1).

7. Apparatus (10) according to one of Claims 2 to 6, if referring back to Claim 2, in which the adjusting gear (2) is mounted rotatably in the interior space of the crankcase of the reciprocating piston internal combustion engine (100).

8. Apparatus (10) according to one of the preceding claims,
- in which an intermediate gear mechanism (7') is configured as part of the coupling unit (56) with an externally toothed intermediate gearwheel (7-1) and an intermediate shaft (7) which supports an externally toothed intermediate gearwheel (7-1), parallel and spaced apart radially with respect to the crankshaft axis (21) and with respect to the first and second take-off shaft (5, 6),
- the intermediate gear mechanism (7') directly bringing about mechanical coupling by way of meshing of the first gearwheel (5-2) of the first take-off shaft (5) with the external toothing system (3-1) of the eccentric (3).

9. Apparatus (10) according to one of the preceding claims,
- in which a synchronizing gear mechanism (4') is configured as part of the coupling unit (56) with an externally toothed synchronizing gearwheel (4-1) and a synchronizing shaft (4) which supports an externally toothed synchronizing gearwheel (4-1), parallel to the crankshaft axis (21) and to the first and second take-off shaft (5, 6) in order to vary a compression ratio of further cylinders of the reciprocating piston internal combustion engine (100),
- the synchronizing gear mechanism (4') bringing about meshing of the synchronizing gearwheel (4-1) with the external toothing system (3-1) of the eccentric (3) .

10. Reciprocating piston internal combustion engine (100),
- with a crank drive (20') with a crankshaft (20) with at least one crankpin journal (28) which is mounted in a rotationally movable manner on both sides,
- the crankpin journal (28)
(i) being operatively connected to a connecting rod (22) and a piston which is arranged such that it can be moved slidingly in the cylinder of the reciprocating piston internal combustion engine (100), and
(ii) being configured to convert a rotational movement of the crankshaft (20) into a bidirectional, translational movement of the piston with a defined stroke height, and
- with an apparatus (10) according to one of Claims 1 to 9 for varying a compression ratio of the reciprocating piston internal combustion engine (100) .

11. Reciprocating piston internal combustion engine (100) according to Claim 10 which is configured in such a way
(a) that an eccentric (3) of the crank drive (20') rotates with a relative and/or controllably adjustable phase and/or relative rotational speed with respect to the rotation of the crankshaft (20),
(b) that toothing systems ensure these ratios by way of suitable meshing with a stationary adjusting gear (2) of the apparatus (10) for varying a compression ratio, and
(c) that the phase angle of the rotation of the eccentric (3) and therefore the setting of the compression ratio can be brought about by way of a rotation of the adjusting gear (1) via an adjusting device (1) of the apparatus for varying a compression ratio,
(d) it being possible for the eccentric (3) to be set with a rotary angle, correspondingly present relative to the ignition time, and a resulting compression.

12. Working apparatus with a reciprocating piston internal combustion engine (100) which is configured as drive means for a unit of the working apparatus, and is configured according to Claim 10 or 11.

## Revendications

1. Dispositif (10) pour modifier un rapport de compression d'un moteur à combustion interne à piston alternatif (100),
- avec un excentrique (3) à denture extérieure, qui est agencé entre un maneton (28) d'un vilebrequin (20) d'un mécanisme à manivelle (20') du moteur à combustion interne à piston alternatif (100) et un œil de tête de bielle d'une bielle (22) du moteur à combustion interne à piston alternatif (100) de manière mobile en rotation pour modifier une hauteur de course d'un piston du moteur à combustion interne à piston alternatif (100) couplé mécaniquement à la bielle (22),
- avec une unité de réglage (12), qui est couplée mécaniquement indirectement à une denture extérieure (3-1) de l'excentrique (3) et qui est réalisée pour régler l'excentrique (3) par rotation de l'excentrique (3), et
- avec une unité de couplage (56), qui est réalisée pour coupler mécaniquement l'excentrique (3) à l'unité de réglage (12),
dans lequel :
- l'unité de couplage (56) est réalisée avec des premier et deuxième arbres de prélèvement (5, 6) agencés parallèlement l'un à l'autre, espacés radialement l'un de l'autre et couplés mécaniquement entre eux,
- le premier arbre de prélèvement (5) est couplé mécaniquement à la denture extérieure (3-1) de l'excentrique (3),
- le deuxième arbre de prélèvement (6) est couplé mécaniquement à l'unité de réglage (12),
- l'unité de couplage (56) avec les premier et deuxième arbres de prélèvement (5, 6), l'excentrique (3) et l'unité de réglage (12) sont partiellement ou entièrement réalisés à l'intérieur d'un carter de vilebrequin du vilebrequin (20) du moteur à combustion interne à piston alternatif (100), d'un espace de montage d'une joue (23) du vilebrequin (20) du moteur à combustion interne à piston alternatif (100) et d'un espace de montage d'un contrepoids (24) du vilebrequin (20) du moteur à combustion interne à piston alternatif (100),
- le premier arbre de prélèvement (5) de l'unité de couplage (56) est agencé parallèlement et espacé radialement d'un axe de rotation (21) du vilebrequin (20) du moteur à combustion interne à piston alternatif (100) et présente une première roue dentée (5-2) à denture extérieure pour la rotation de l'excentrique (3) ainsi qu'une deuxième roue dentée (5-1) décalée axialement et solidaire en rotation de la première roue dentée (5-2) du premier arbre de prélèvement (5), et
- le deuxième arbre de prélèvement (6) de l'unité de couplage (56) est agencé parallèlement et espacé radialement de l'axe de rotation (21) du vilebrequin (20) et du premier arbre de prélèvement (5) et présente une première roue dentée (6-1) à denture extérieure engrenant avec la deuxième roue dentée (5-2) du premier arbre de prélèvement (5) ainsi que, décalée axialement et solidaire en rotation de la première roue dentée (6-1) du deuxième arbre de prélèvement (6), une deuxième roue dentée (6-2) à denture extérieure.

2. Dispositif (10) selon la revendication 1, dans lequel l'unité de réglage (12) présente une roue de réglage (2), qui est réalisée sous forme de couronne avec une denture extérieure (2-1) pour recevoir un mouvement de réglage pour l'excentrique (3) et solidaire en rotation de la denture extérieure (2-1) avec une denture intérieure (2-2) pour le couplage mécanique à l'unité de couplage (56).

3. Dispositif (10) selon la revendication 2, dans lequel l'unité de couplage (56) est partiellement ou entièrement agencée à l'intérieur de l'espace de montage de la roue de réglage (2).

4. Dispositif (10) selon l'une quelconque des revendications précédentes, dans lequel l'unité de couplage (56) est réalisée sous forme d'unité de transmission tournant partiellement ou entièrement (a) dans l'espace intérieur du carter de vilebrequin, (b) dans l'espace de montage d'une joue (23) du vilebrequin (20) et (c) dans l'espace de montage d'un contrepoids (24) .

5. Dispositif (10) selon l'une quelconque des revendications 2 à 4, dans la mesure où elles se rapportent à la revendication 2, dans lequel la deuxième roue dentée (6-2) du deuxième arbre de prélèvement (6) est agencée en engrènement sur la denture intérieure (2-2) de la roue de réglage (2).

6. Dispositif (10) selon l'une quelconque des revendications 2 à 5, dans la mesure où elles se rapportent à la revendication 2, dans lequel la denture extérieure (2-1) de la roue de réglage (2) est en prise avec un appareil de réglage (1).

7. Dispositif (10) selon l'une quelconque des revendications 2 à 6, dans la mesure où elles se rapportent à la revendication 2, dans lequel la roue de réglage (2) est logée de manière rotative dans l'espace intérieur du carter de vilebrequin du moteur à combustion interne à piston alternatif (100).

8. Dispositif (10) selon l'une quelconque des revendications précédentes,
- dans lequel un engrenage intermédiaire (7') faisant partie de l'unité de couplage (56) avec une roue dentée intermédiaire (7-1) à denture extérieure et avec un arbre intermédiaire (7) portant une roue dentée intermédiaire (7-1) à denture extérieure est réalisé parallèlement et espacé radialement de l'axe de vilebrequin (21) et du premier et du deuxième arbre de prélèvement (5, 6),
- dans lequel l'engrenage intermédiaire (7') assure directement un couplage mécanique par engrènement de la première roue dentée (5-2) du premier arbre de prélèvement (5) avec la denture extérieure (3-1) de l'excentrique (3).

9. Dispositif (10) selon l'une quelconque des revendications précédentes,
- dans lequel un synchroniseur (4') faisant partie de l'unité de couplage (56) avec une roue dentée de synchronisation (4-1) à denture extérieure et un arbre de synchronisation (4) portant une roue dentée de synchronisation (4-1) à denture extérieure est réalisé parallèle à l'axe de vilebrequin (21) et au premier et au deuxième arbre de prélèvement (5, 6) pour modifier un rapport de compression d'autres cylindres du moteur à combustion interne à piston alternatif (100),
- dans lequel le synchroniseur (4') provoque un engrènement de la roue dentée de synchronisation (4-1) avec la denture externe (3-1) de l'excentrique (3).

10. Moteur à combustion interne à piston alternatif (100),
- avec un mécanisme à manivelle (20') avec un vilebrequin (20) avec au moins un maneton (28) monté de manière mobile en rotation des deux côtés,
- dans lequel le maneton (28)
(i) est en liaison active avec une bielle (22) et un piston agencé de manière mobile en coulissement dans un cylindre du moteur à combustion interne à piston alternatif (100) et
(ii) est réalisé pour convertir un mouvement de rotation du vilebrequin (20) en un mouvement de translation bidirectionnel du piston avec une hauteur de course définie, et
- avec un dispositif (10) selon l'une quelconque des revendications 1 à 9 pour modifier un rapport de compression du moteur à combustion interne à piston alternatif (100).

11. Moteur à combustion interne à piston alternatif (100) selon la revendication 10, qui est adapté de telle sorte
(a) qu'un excentrique (3) du mécanisme à manivelle (20') tourne avec une phase relative et/ou réglable de manière commandable et/ou une vitesse de rotation relative par rapport à la rotation du vilebrequin (20),
(b) que des dentures assurent ces rapports par un engrènement approprié avec une roue de réglage (2) fixe du dispositif (10) pour modifier un rapport de compression et
(c) que par une rotation de la roue de réglage (1) par l'intermédiaire d'un appareil de réglage (1) du dispositif pour modifier un rapport de compression, l'angle de phase de la rotation de l'excentrique (3) et ainsi le réglage du rapport de compression peuvent être effectués,
(d) dans lequel l'excentrique (3) peut être réglé avec un angle de rotation correspondant par rapport à l'instant d'allumage et une compression qui en résulte.

12. Dispositif de travail avec un moteur à combustion interne à piston alternatif (100), qui est réalisé sous forme de moyen d'entraînement pour un groupe du dispositif de travail et selon la revendication 10 ou 11.
